# EUROPÄISCHE PATENTSCHRIFT

(11) **EP 0 993 394 B1**
(45) Veröffentlichungstag und Bekanntmachung des Hinweises auf die Patenterteilung: **06.02.2002**
(21) Anmeldenummer: 98936316.3
(22) Anmeldetag: 08.06.1998
(51) Int. Cl.: B60R 13/08, G10K 11/172

(54) **UNTERBODENVERKLEIDUNG**
UNDERBODY COWLING
HABILLAGE DE BAS DE CAISSE

(30) Priorität: 11.07.1997 DE 29712278 U
(43) Veröffentlichungstag der Anmeldung: 19.04.2000
(73) Patentinhaber: FAIST Automotive GmbH & Co. KG, 86381 Krumbach (DE)
(72) Erfinder: PFAFFELHUBER, Klaus, D-89312 Günzburg (DE)
(74) Vertreter: Müller, Hans-Jürgen, Dipl.-Ing.
(86) Internationale Anmeldenummer: EP9803440
(87) Internationale Veröffentlichungsnummer: WO9902372

(56) Entgegenhaltungen:
- EP-A- 0 224 654
- EP-A- 0 321 674
- DE-A- 4 404 502
- FR-A- 2 387 822

## Beschreibung

Die Erfindung betrifft eine Unterbodenverkleidung der im Oberbegriff des Anspruchs 1 genannten Gattung wie aus FR-A-2 387822 bekannt ist.

Bei bisher bekannten Unterbodenverkleidungen aus glasfaserververstärktem Polypropylen (PP) sind weiche flexible Dichtlippen angeschweißt, um die Unterbodenverkleidung zur Karosserie abzudichten.

Der Erfindung liegt die Aufgabe zugrunde, die Herstellung der Unterbodenverkleidung ohne Beeinträchtigung ihrer Funktion zu vereinfachen.

Die Erfindung ist im Anspruch 1 gekennzeichnet. Danach besteht die Verkleidung mit der oder den Dichtlippen aus einem Stück. Beide Elemente sind aus gleichem Material spritzgepreßt oder spritzgegossen. Die Bewegbarkeit bzw. Flexibilität der Dichtlippe bzw. Dichtlippen wird durch dünnwandige Ausbildung derselben und/oder Verwendung eines solchen Materials sichergestellt, welche die Flexibilität und Biegbarkeit zum Abdichten gewährleistet.

Die insbesondere schalenartig ausgebildete Verkleidung soll demgegenüber weniger flexibel sein; sie erhält daher eine größere Wand- bzw. Schichtdicke als die Dichtlippe. Zur zusätzlichen Stabilisierung und Erzielung der erforderlichen Steifigkeit empfiehlt sich das Anbringen von Stegen bzw. Rippen, in dem dem Motorbereich zugewandten Hohlraum bzw. Innenraum oder Aushöhlung der Verkleidung.

Wird die durch die Stege erzielte "Verrippung" geeignet dimensioniert, so läßt sich auch eine insb. als dünne Folie ausgebildete Membranschicht aus beispielsweise geschäumten Polypropylen direkt auf die Stege aufschmelzen.

Es ist es nicht zwingend erforderlich, die folienartige Membranschicht selbst vorzuformen, da die Verformung derselben, falls erforderlich, direkt beim Schweißvorgang (Spritzen und Plastifizieren der miteinander zu verbindenden Kunststoffteile) durch die Stege erreicht wird.

Bevorzugte Ausführungsbeispiele sind in der Zeichnung dargestellt. Dabei zeigen:
- Figur 1: einen schematischen Querschnitt durch eine erfindungsgemäße Unterbodenverkleidung und
- Figur 2: gleichfalls einen schematischen Querschnitt einer alternativen Ausbildung im Bereich eines Stirnendes, an der sich eine Dichtlippe befindet.

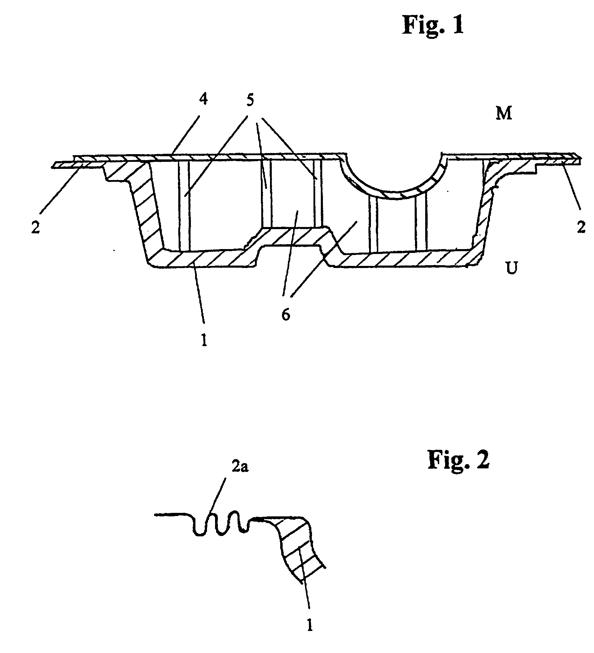

Gemäß Figur 1 ist eine Verkleidung 1 schalenförmig so ausgebildet, daß der sich auswölbende Teil nach unten, d.h. zum Untergrund U, gerichtet ist, während der durch die Schalenform gebildete Hohl- oder Innenraum nach oben, d.h. dem Motorbereich M zugewandt, montiert wird. An den beiden Stirnenden der Verkleidung 1 befinden sich zwei stegförmig dünne Dichtlippen 2, die aus dem gleichen Material insb. thermoplastischem Kunststoff, wie PP, der schalenförmigen Verkleidung 1 bestehen und mit dieser im gleichen Spritzgieß- oder Spritzpresswerkzeug spritzgepreßt sind. Hierdurch erübrigt sich die Verwendung unterschiedlicher Materialien und unterschiedlicher Werkzeuge und ist auch nicht das zusätzliche Anmontieren von Dichtlippen an die Verkleidung erforderlich.

Gemäß der Variante von Figur 2, bei der für die Verkleidung 1 ein relativ steifes Material und nicht so flexibles Material wie nach Figur 1 verwendet ist, wird die Dichtlippe 2a noch wesentlich dünner und wellenförmig gewendelt ausgebildet, um die Flexibilität zu gewährleisten.

Bei der Ausführungsform von Figur 1 wird zum Versteifen der Verkleidung 1 aus relativ flexiblem Material der nach oben gewendete Innenraum mit sich gleichfalls nach oben erstrekkenden im wesentlichen parallelen Stegen bzw. Rippen 5 versehen, welche nach Art einer "Verrippung" die Steifigkeit erhöhen.

Zusätzlich kann die Oberseite, d.h. die dem Motorbereich M zugewandte Seite, des aus der Verkleidung 1, den Dichtlippen 2 und den Rippen 5 bestehenden Bauteils durch eine dünne Membran, insb. eine Folie 4, abgedeckt werden, so daß sich Hohlräume 6 zwischen den Stegen 5, der Verkleidung 1 und der Folie 4 bilden, die aufgrund der Flexibilität der membranartig schwingfähigen Folie 4 sogen. "Membrankammern" bilden, wodurch eine verbesserte Geräuschdämpfung bzw. -dämmung erreichbar ist. Die Membranschicht kann auch aus Schaumstoff bestehen, wozu beispielsweise Polypropylen angewendet werden kann. Diese Schaumstoffschicht wird dann direkt auf die Stege 5 aufgeschmolzen.

## Patentansprüche

1. Unterbodenverkleidung im Motorbereich (M) von insbesondere Fahrzeugen, mit mindestens einer Dichtlippe (2) zur Abdichtung der Fahrzeugkarosserie oder dergleichen, bei der die Verkleidung (1) mit der Dichtlippe (2) aus gleichem Material geformt sind,
**dadurch gekennzeichnet,**
**daß** die aus der Verkleidung (1) und der dünnen Dichtlippe (2) bestehende, aus thermoplastischem Material gebildete Baueinheit spritzgepreßt oder spritzgegossen ist und daß die dünne Dichtlippe (2) wesentlich biegbarer bzw. flexibler als ein durch Stege bzw. Rippen (5) versteifter Teil der Verkleidung (1) ausgebildet ist.

2. Unterbodenverkleidung nach Anspruch 1,
**dadurch gekennzeichnet,**
**daß** die Verkleidung (1) schalenförmig ausgebildet ist.

3. Unterbodenverkleidung nach Anspruch 2
**dadurch gekennzeichnet,**
**daß** die Stege bzw. Rippen (5) an der dem Motorbereich (M) zugewandten Seite der Verkleidung angeordnet sind.

4. Unterbodenverkleidung nach einem der vorhergehenden Ansprüche,
**dadurch gekennzeichnet**
**daß** die Verkleidung (1) an der dem Motorbereich (M) zugewandten Seite mit einer Folie (4) überzogen ist, durch welche Hohlräume (6) gebildet sind, so daß die Folie (4) als Membran wirkt und die von ihr abgeschlossenen Hohlräume (6) zwischen den Stegen bzw. Rippen (5) als Membrankammern dienen und eine schallabsorbierende Wirkung erzielen.

## Claims

1. Underbody cowling in the engine zone (M) particularly of motor vehicles, comprising at least one sealing lip (2) for sealing of the vehicle body or the like, wherein the cowling (1) with said sealing lip (2) are made of the same material,
**characterised in**
**that** the structural unit consisting of the cowling (1) and said thin sealing lip (2) and made of a thermoplastic material is manufactured by transfer moulding or injection moulding, and that said thin sealing lip (2) is configured to be substantially more strongly bendable or flexible than a part of the cowling (1), which is reinforced by webs or ribs (5), respectively.

2. Underbody cowling according to Claim 1,
**characterised in**
**that** the cowling (1) presents a shell-shaped configuration.

3. Underbody cowling according to Claim 2,
**characterised in**
**that** said webs or ribs (5), respectively are disposed on that side of the cowling that faces said engine zone (M).

4. Underbody cowling according to any of the preceding Claims,
**characterised in**
**that** the cowling (1) is coated with a film (4) on its side facing said engine zone (M), which film forms hollow spaces (6) such that said film (4) acts as a membrane and that said spaces (6) closed by said film between said webs or ribs (5), respectively, serve as membrane chambers and achieve a sound-absorbing effect.

## Revendications

1. Habillage de bas de caisse dans la zone de moteur (M), en particulier pour de véhicules automobiles, comprenant au moins une lèvre d'étanchéité (2) à boucher la caisse du véhicule ou un élément similaire, dans lequel l'habillage (1) ensemble avec ladite lèvre d'étanchéité (2) sont faits du même matériau,
**caractérisé en ce**
**que** l'unité de structure, qui consiste en l'habillage (1) et ladite mince lèvre d'étanchéité (2) et qui est faite d'un matériau thermoplastique, est produite par moulage par transfert ou par moulage par injection, et en ce que ladite mince lèvre d'étanchéité (2) est configurée de façon, qu'elle soit essentiellement plus pliable ou flexible qu'une partie de l'habillage (1), qui est renforcée par des entretoises ou respectivement nervures (5).

2. Habillage de bas de caisse selon la revendication 1,
**caractérisé en ce**
**que** l'habillage (1) a une configuration sous forme de coque.

3. Habillage de bas de caisse selon la revendication 2,
**caractérisé en ce**
**que** lesdites entretoises ou respectivement nervures (5) sont disposées du côté de l'habillage, qui se trouve en face de ladite zone de moteur (M).

4. Habillage de bas de caisse selon une quelconque des revendications précédentes,
**caractérisé en ce**
**que** l'habillage (1) est revêtu d'un film (4) de son côté en face de ladite zone de moteur (M), ce film formant des espaces creux (6) de façon, que ledit film (4) serve en tant que membrane, et en ce que lesdits espaces creux (6), qui sont bouchés par ledit film entre lesdites entretoises ou respectivement nervures (5), ont la fonction de chambres à membrane et achèvent l'effet d'un élément d'absorption acoustique.
